# EUROPEAN PATENT SPECIFICATION

(11) **EP 3 450 484 B1**
(45) Date of publication and mention of the grant of the patent: **15.03.2023**
(21) Application number: 17881192.3
(22) Date of filing: 18.07.2017
(51) Int. Cl.: B29B 7/92, C08J 3/20, C08J 5/04, C08K 3/22, C08K 9/02, B29B 7/42, B29B 7/48, B60R 13/02, B29C 45/00

(54) **METHOD FOR PRODUCING INTERIOR TRIM**
VERFAHREN ZUR HERSTELLUNG EINER INNENVERKLEIDUNG
PROCÉDÉ DE PRODUCTION DE GARNITURE INTÉRIEURE

(30) Priority: 12.12.2016 JP 2016240120
(43) Date of publication of application: 06.03.2019
(73) Proprietor: Toyota Shatai Kabushiki Kaisha, Kariya-shi Aichi 448-0002 (JP)
(72) Inventor: SEGI Makoto, Kariya-shi Aichi 448-0002 (JP)
(74) Representative: McWilliams, David John
(86) International application number: PCT/JP2017/025843
(87) International publication number: WO 2018/109972

(56) References cited:
- WO-A1-2015/000363
- WO-A1-2016/063914
- CN-A- 103 194 075
- CN-A- 106 243 542
- JP-A- H0 641 316
- JP-A- H10 305 470
- JP-A- 2001 081 338
- JP-A- 2004 114 356
- JP-A- 2007 197 600
- KR-B1- 101 467 255
- US-A- 5 288 772
- US-A1- 2015 094 413
- US-B2- 8 784 503
- ZHIPING WU ET AL: "The Effect of Ultrafine Magnesium Hydroxide on the Tensile Properties and Flame Retardancy of Wood Plastic Composites", JOURNAL OF NANOMATERIALS, vol. 2014, 1 January 2014 (2014-01-01), pages 1-8, XP055638765, US ISSN: 1687-4110, DOI: 10.1155/2014/945308
- JAE GYOUNG GWON ET AL: "Thermal degradation behavior of polypropylene base wood plastic composites hybridized with metal (aluminum, magnesium) hydroxides", JOURNAL OF APPLIED POLYMER SCIENCE, vol. 131, no. 7, 5 April 2014 (2014-04-05) , pages n/a-n/a, XP055638766, US ISSN: 0021-8995, DOI: 10.1002/app.40120
- H Kallakas ET AL: "Effect of chemical modification of wood flour on the mechanical properties of wood-plastic composites", Agronomy Research, 1 January 2015 (2015-01-01), 4 November 2019 (2019-11-04), pages 639-653, XP055638767, Retrieved from the Internet: URL:https://pdfs.semanticscholar.org/f66c/ ce17b03cc0984a4508976c76b3615ca05e4c.pdf [retrieved on 2019-11-04]
- MAYA JACOB JOHN ET AL: "Recent developments in chemical modification and characterization of natural fiber-reinforced composites", POLYMER COMPOSITES, vol. 29, no. 2, 1 February 2008 (2008-02-01), pages 187-207, XP055638768, ISSN: 0272-8397, DOI: 10.1002/pc.20461
- D. PUGLIA ET AL: "A Review on Natural Fibre-Based Composites-Part II : Application of Natural Reinforcements in Composite Materials for Automotive Industry", JOURNAL OF NATURAL FIBERS, vol. 1, no. 3, 6 April 2005 (2005-04-06), pages 23-65, XP055638769, US ISSN: 1544-0478, DOI: 10.1300/J395v01n03_03
- Dipl.-Geogr Dominik Vogt ET AL: "Wood-Plastic-Composites (WPC) Holz-Kunststoff-Verbundwerkstoffe Wood-Plastic-Composites (WPC) -1 - nova-Institut, Januar 2006", , 1 January 2006 (2006-01-01), pages 1-96, XP055638909, Retrieved from the Internet: URL:http://nova-institut.de/pdf/06-01_WPC- Studie.pdf [retrieved on 2019-11-05]
- ASHORI ET AL: "Wood-plastic composites as promising green-composites for automotive industries!", BIORESOURCE TECHNOLOGY, ELSEVIER, AMSTERDAM, NL, vol. 99, no. 11, 1 July 2008 (2008-07-01), pages 4661-4667, XP022606269, ISSN: 0960-8524, DOI: 10.1016/J.BIORTECH.2007.09.043 [retrieved on 2007-12-18]

## Description

The present disclosure relates to an interior part manufacturing method in which a plant fiber-reinforced resin is used as a material.

In an automobile or other such vehicles, when a cabin temperature is raised to high temperature under the blazing sun, an interior part, e.g., an instrument panel or a seat, may generate various volatiles. The volatiles may be cooled by contacting glass windows cooled by ambient air, so as to adhere to interior surfaces of the glass windows. The adhered volatiles may cause the glass windows to be misted (a fogging phenomenon). Japanese Laid-Open Patent Publication No. 2011-213956 teaches that in order to reduce the fogging phenomenon, leather materials used as outer materials of the interior part, e.g., the instrument panel, are treated by contacting an alkaline aqueous solution. Due to the treatment, volatile acidic substances contained in the leather materials may be neutralized and stabilized, so that the fogging phenomenon may be controlled.

However, when the interior part is a resin molded article, e.g., the instrument panel, even if the resin molded article contacts the alkaline aqueous solution, the resin molded article cannot be impregnated with the aqueous solution. Therefore, when the volatile acidic substances are contained in the resin molded article, a neutralization reaction between the volatile acidic substances contained in the resin molded article and the alkaline aqueous solution cannot be substantially induced. As a result, it is difficult to prevent the fogging phenomenon caused by the resin molded article (the interior part), e.g., the instrument panel.

Thus, there is a need in the art to provide an improved interior part manufacturing method.

The prior art includes: H Kallakas ET AL: "Effect of chemical modification of wood flour on the mechanical properties of wood-plastic composites", Agronomy Research, 1 January 2015, 4 November 2019, pages 639-653, XP055638767.

### SUMMARY

In a first aspect of the present disclosure, a method may include a mixing step for mixing only a wood powder as a plant fiber with a powder of alkaline substances, so as to form a mixture only of wood powder and powder of alkaline substances, wherein the method comprises a kneading step after the mixing step is completed, wherein the mixture and a resin are fed into a kneading machine and kneaded together to a condition in which the resin is thermally melted, so as to form a plant fiber-reinforced resin, and wherein the method further comprises a molding step for forming an interior part using the plant fiber-reinforced resin obtained in the kneading step.

According to the first aspect, in the mixing step, the wood powder may be mixed with the alkaline substances, so that the neutralization reaction between the volatile substances or aliphatic acids contained in the wood powder and the alkaline substances may be induced. Therefore, aliphatic acids contained in the wood powder may be changed to metal soap, so that the volatile substances contained in the wood powder may be reduced. As a result, the volatile substances contained in the plant fiber-reinforced resin obtained in the kneading step may be reduced, so that the volatile substances contained in the interior part formed in the molding step may be reduced. Thus a result, a fogging phenomenon caused by the interior part formed using the plant fiber-reinforced resin may be effectively prevented.

According to a second aspect, a compound of a metal having atomic weight greater than sodium is used as the alkaline substances. Therefore, the metal soap produced by the neutralization reaction between aliphatic acids contained in the wood powder and the alkaline substances may be increased in weight. As a result, aliphatic acids may be effectively prevented from being volatilized due to the neutralization reaction.

According to a third aspect, alkaline substances of which a saturated aqueous solution has a pH value of 9.5 or more are used as the alkaline substances. Therefore, the neutralization reaction between aliphatic acids contained in the wood powder and alkaline substances may be induced quickly.

According to a fourth aspect, a heating step is provided between the kneading step and the molding step, and in the heating step, the plant fiber-reinforced resin is heated at a temperature not less than a temperature at which volatile substances contained in the wood powder is volatilized and less than a temperature at which the resin is melted. Therefore, even when aliphatic acids contained in the wood powder remain unneutralized without neutralized by the alkaline substances, such aliphatic acids may be volatilized in the heating step so as to be removed from the plant fiber-reinforced resin. As a result, the fogging phenomenon caused by the interior part may be further prevented. Further, odor components may be volatilized in the heating step. This may contribute to reduction of a smell of burning as an additional effect.

According to a fifth aspect, a ratio of the alkaline substances to the wood powder by weight is set to 5 percent or more. Therefore, aliphatic acids contained in the wood powder may be effectively neutralized.

### BRIEF DESCRIPTION OF THE DRAWINGS

FIG. 1 is a block diagram showing a manufacturing method (process) of an interior part according to an embodiment of the present disclosure.
FIG. 2 is a schematic diagram showing a mixing step in the manufacturing method of the interior part.
FIG. 3 is a schematic diagram showing a kneading step in the manufacturing method of the interior part.
FIG. 4 is a schematic side view of a kneading machine that is used in the kneading step.
FIG. 5 is a schematic diagram showing a heating step in the manufacturing method of the interior part.
FIG. 6 is a schematic diagram showing a molding step in the manufacturing method of the interior part.
FIG. 7 is a table of constituents used in the manufacturing method of the interior part.

### DETAILED DESCRIPTION

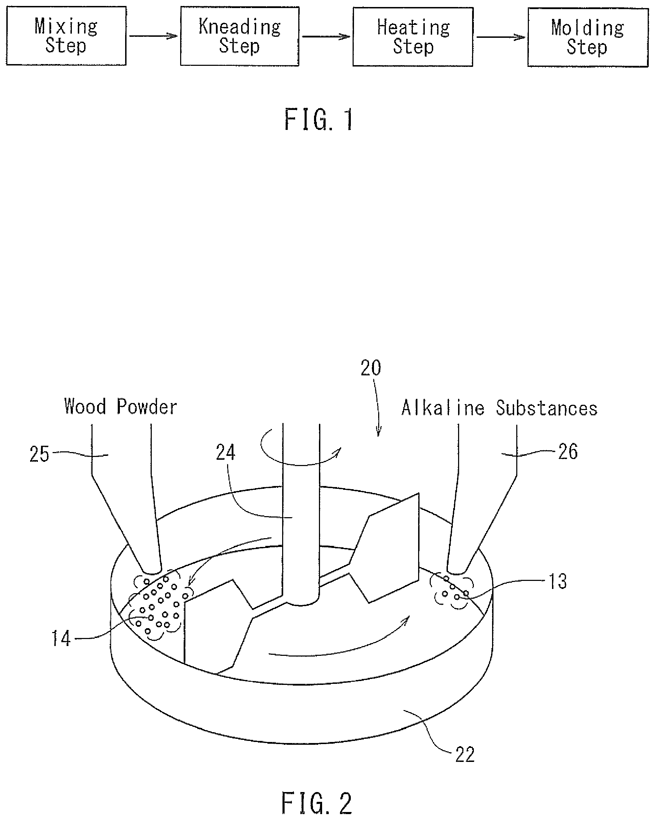

In the following, a manufacturing method of an interior part according to an embodiment of the present disclosure will be described with reference to FIGS. 1 to 7. Further, the interior part according to the embodiment is intended to be disposed in a cabin of an automobile and is made of a plant fiber-reinforced resin.

### <Outline of Manufacturing Method of Automotive Interior Part W>

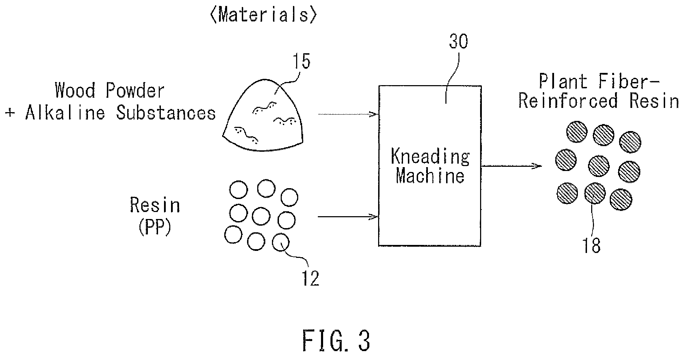

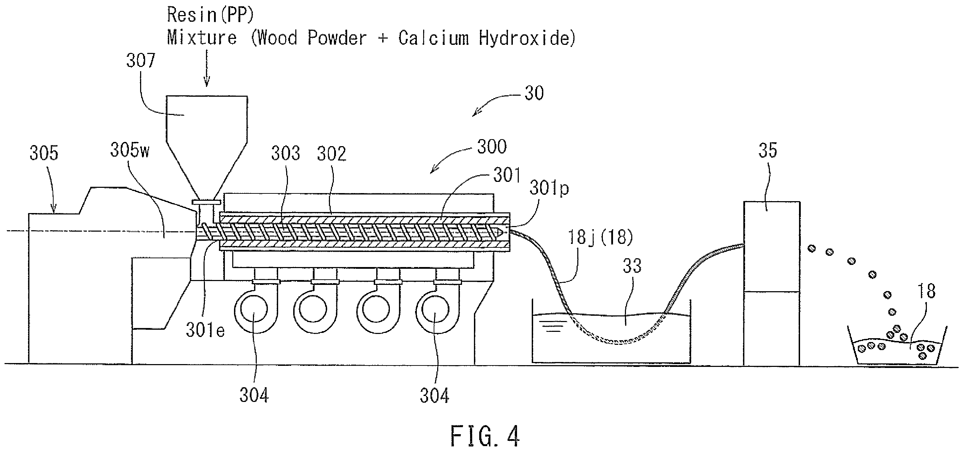

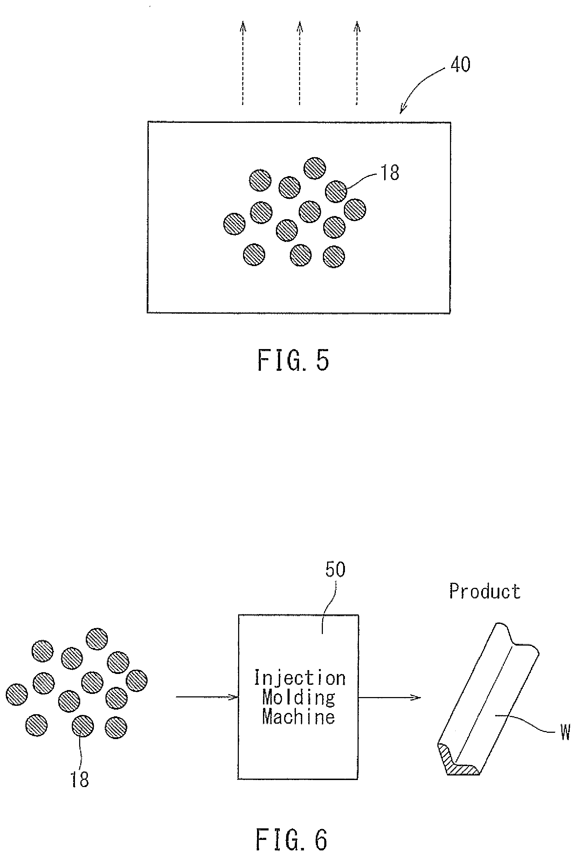

As shown in FIG. 1, the automotive interior part W may be manufactured through a mixing step, a kneading step, a heating step and a molding step. As shown in FIG. 2, the mixing step is a step in which a wood powder 14 used as one of constituents of the plant fiber-reinforced resin 18 (FIG. 3) is mixed with alkaline substances 13 (calcium hydroxide), so as to neutralize volatile aliphatic acids contained in the wood powder 14. As shown in FIG. 3, the kneading step is a step in which a wood powder mixture 15 (the wood powder 14 + the alkaline substances 13) obtained in the mixing step and a resin (e.g. polypropylene (PP)) 12 are mixed and kneaded in a kneading machine 30 (FIG. 4). As shown in FIG. 5, the heating step may be a step in which pellets of the plant fiber-reinforced resin 18 obtained in the kneading step are heated at a predetermined temperature in order to volatilize and remove volatile substances, e.g., aliphatic acids remaining unneutralized. As shown in FIG. 6, the molding step may be a step in which an injection molding machine 50 forms the interior part W using the pellets of the plant fiber-reinforced resin 18 treated in the heating step. Further, the wood powder mixture 15 may be referred to as a mixture in the present disclosure.

### <Regarding Mixing Step>

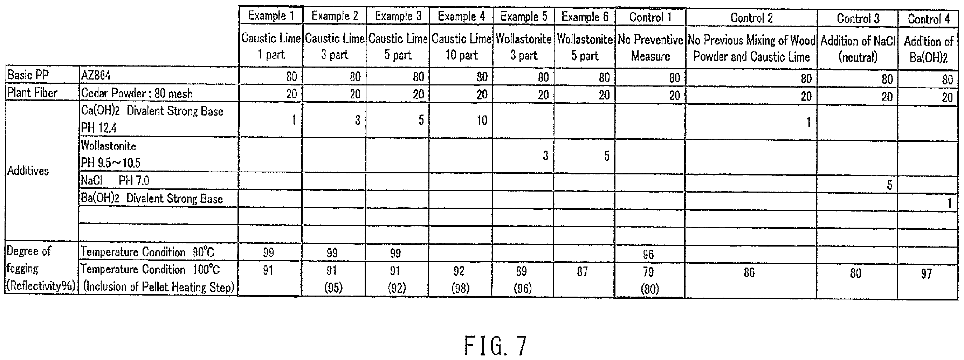

In the mixing step, for example, a mixing machine 20 may be used. As shown in FIG. 2, the mixing machine 20 may have a mixing vessel 22, a stirring blade 24 that is configured to horizontally rotate in the mixing vessel 22, and feeding ports 25 and 26 that are respectively configured to feed the wood powder 14 and the alkaline substances 13 into the mixing vessel 22 therethrough. Further, powder of cedar timber from forest thinning having 80 mesh in particle size may be used as the wood powder 14. Further, a powder of caustic lime, i.e., calcium hydroxide (Ca(OH)₂), may be used as the alkaline substances 13. Further, a saturated aqueous solution of calcium hydroxide may have a pH value of 12.4. As shown by Example 1 of a table of constituents shown in FIG. 7, in the mixing step, a mixing ratio of the wood powder 14 and calcium hydroxide may be 20:1 by weight. That is, a ratio of calcium hydroxide to the wood powder 14 by weight may be 5 percent. In the mixing step, rotation number and rotation time of the stirring blade 24 may be set such that calcium hydroxide may be homogeneously mixed with the wood powder 14. Thus, volatile aliphatic acids contained in the wood powder 14 may be neutralized by calcium hydroxide. That is, due to a neutralization reaction, aliphatic acids contained in the wood powder 14 may be changed to metal soap and water, so as to be less likely to volatilize.

### <Regarding Kneading Step>

In the kneading step, the kneading machine 30 may be used. As shown in FIG. 3, the kneading machine 30 may be a machine that functions to knead the wood powder mixture 15 (the wood powder 14 + the alkaline substances 13 (calcium hydroxide)) obtained in the mixing step with the polypropylene (PP) resin 12, so as to produce the plant fiber-reinforced resin 18. Further, as shown by Example 1 of the table of constituents shown in FIG. 7, a mixing ratio of the polypropylene (PP) resin 12 (which will be hereinafter referred to as a resin 12) and the wood powder mixture 15 may be 80:20 by weight. Further, even in the kneading step, the neutralization reaction between aliphatic acids contained in the wood powder 14 and calcium hydroxide may be continuously induced.

As shown in FIG. 4, the kneading machine 30 may be an extrusion-type kneading machine that knead the resin 12 with the wood powder mixture 15 (the wood powder 14 + the alkaline substances 13 (calcium hydroxide)) in a condition in which the resin 12 is thermally melted, so as to produce the plant fiber-reinforced resin 18. The kneading machine 30 may have a kneading machine main unit 300, a cooling tank in which a soft rod-shaped product 18j of the plant fiber-reinforced resin 18 extruded from the kneading machine main unit 300 is cooled, and a cutter 35 to cut the cooled soft rod-shaped product 18j into pellets of a predetermined size.

As shown in FIG. 4, the kneading machine main unit 300 may have a cylinder 301 having an inlet portion 301e formed in one end (left) portion thereof and an outlet portion 301p formed in the other end (right) portion thereof, and a helical screw 303 that is coaxially received in the cylinder 301. Further, the kneading machine main unit 300 may have a heater 302 that is circumferentially attached to the cylinder 301 in order to heat an interior space of the cylinder 301. Also, the kneading machine main unit 300 may have a cooling device 304 that is positioned under and along the cylinder 301. Thus, the kneading machine main unit 300 may be controlled such that the interior space of the cylinder 301 may be maintained at a temperature of about 200 °C.

Further, the kneading machine main unit 300 may include a drive mechanism 305 positioned adjacent to the inlet portion 301e of the cylinder 301 and having a motor or other such devices. The drive mechanism 305 may include a reducer 305w of which an output shaft (not shown) is coaxially connected to the screw 303. Therefore, when the drive mechanism 305 is activated, the screw 303 may rotate about its axis within the cylinder 301, so that a kneading operation may be performed. Further, the kneading machine main unit 300 may include a hopper 307 for feeding pellets of the resin 12 and the wood powder mixture 15 (the wood powder 14 + the alkaline substances 13 (calcium hydroxide)) to the inlet portion 301e of the cylinder 301.

### <Regarding Heating Step and Molding Step>

As previously described, the heating step may be the step in which the pellets of the plant fiber-reinforced resin 18 obtained in the kneading step are heated at the predetermined temperature in order to volatilize and remove the volatile substances, e.g., aliphatic acids remaining unneutralized. In the heating step, for example, a heating chamber 40 may be used. The heating chamber 40 may be configured to heat the pellets of the plant fiber-reinforced resin 18 at a temperature of about 140 °C for 1 to 5 hours. Thus, the volatile substances, e.g., aliphatic acids remaining unneutralized in the plant fiber-reinforced resin 18, may be volatilized and removed in the heating chamber 40. Further, because the resin 12 (PP) may have a melting point of 160 °C, the pellets of the plant fiber-reinforced resin 18 may be prevented from being melted in the heating chamber 40. Conversely, in the molding step, the pellets of the plant fiber-reinforced resin 18 treated in the heating step may be molded by the injection molding machine 50, so that the interior part W is formed.

Thus, in the mixing step, volatile aliphatic acids contained in the wood powder 14 may be neutralized. Thereafter, in the heating step, the volatile substances remaining in the plant fiber-reinforced resin 18 may be volatilized and removed. Therefore, the volatile substances may be virtually absent in the interior part W made of the plant fiber-reinforced resin 18. Test results of a fogging test of the interior part W is described in a lower part of Example 1 shown in FIG. 7. As shown in the results, when the fogging test of the interior part W is conducted under an ambient temperature of 90 °C corresponding to an upper limit temperature in a vehicle cabin, a glass plate has a reflectivity (glossiness) of 99 % (the glass plate is little misted). Further, when the fogging test of the interior part W is conducted under the ambient temperature of 100 °C corresponding to a maximum temperature in the vehicle cabin, the glass plate has the reflectivity (glossiness) of 91 %.

Next, Controls 1 to 3 shown in FIG. 7 will be described. Control 1 shows fogging test results in a case in which no fogging preventive measures is taken. In Control 1, the mixing step does not exist. Further, the interior part W is formed using the plant fiber-reinforced resin 18 that is obtained by mixing the wood powder 14 and the resin 12 at a ratio of 20:80 by weight and kneading them. With regard to the interior part W of Control 1, the fogging test is conducted under the ambient temperature of 90 °C. In the fogging test, the glass plate has the reflectivity (glossiness) of 96 %. Also, the fogging test of the interior part W is conducted under the ambient temperature of 100 °C (the heating step is omitted). In the fogging test, the glass plate has the reflectivity (glossiness) of 79 %. Further, when the heating step is included, the reflectivity (glossiness) of the glass plate may be slightly improved to 80 %. Thus, in Control 1 (no fogging preventive measures), because the volatile substances or aliphatic acids contained in the wood powder 14 are poorly removed, the fogging test results are inferior as compared with Example 1 described above.

In Control 2, the mixing step is omitted. The wood powder 14 and calcium hydroxide (the same amount as Example 1) are fed into the kneading machine 30 with the resin 12, so as to produce the plant fiber-reinforced resin 18. Further, the mixing ratio of the wood powder 14 and the resin 12 is 20:80 by weight. With regard to the interior part W that is formed using the plant fiber-reinforced resin 18 thus produced, the fogging test is conducted under the ambient temperature of 100 °C. In the fogging test, the glass plate has the reflectivity (glossiness) of 86 %. Thus, even when the same amount of calcium hydroxide as Example 1 is used, the fogging test results are inferior as compared with Example 1. The results are considered to be due to the fact that the wood powder 14 and calcium hydroxide cannot be sufficiently mixed with each other, and the neutralization reaction cannot be effectively induced.

In Control 3, in the mixing step, the wood powder 14 is mixed with neutral sodium chloride (NaCl (salt)) instead of calcium hydroxide, so as to produce the wood powder mixture 15. Further, in the wood powder mixture 15, the ratio of the wood powder 14 and sodium chloride may be 20:5 by weight. The interior part W may be formed using the plant fiber-reinforced resin 18 that is obtained by mixing the wood powder mixture 15 and the resin 12 at a ratio of 20:80 by weight and kneading them. With regard to the interior part W of Control 3, the fogging test is conducted under the ambient temperature of 100 °C. In the fogging test, the glass plate has the reflectivity (glossiness) of 80 %, which is identical to Control 1 (no fogging preventive measures) described above. This means that sodium chloride has no effect to remove aliphatic acids contained in the wood powder 14.

### <Advantages of Manufacturing Method of Interior Part W According to Embodiment>

According to the manufacturing method of the interior part W according to the embodiment, the wood powder 14 is mixed with the alkaline substances 13 (calcium hydroxide) in the mixing step, so that the neutralization reaction between the volatile substances or aliphatic acids contained in the wood powder 14 and the alkaline substances 13 may be induced. Therefore, aliphatic acids contained in the wood powder 14 may be changed to the metal soap, so that the volatile substances contained in the wood powder 14 may be reduced. As a result, the volatile substances contained in the pellets of the plant fiber-reinforced resin 18 obtained in the kneading step may be reduced, so that the volatile substances contained in the interior part W formed in the molding step may be reduced. Thus, the fogging phenomenon caused by the interior part W formed using the plant fiber-reinforced resin 18 may be effectively prevented.

Further, a compound of a metal (calcium (Ca: atomic number 20)) having atomic weight greater than sodium (Na: atomic number 11) may be used as the alkaline substances 13. Therefore, the metal soap produced by the neutralization reaction between aliphatic acids contained in the wood powder 14 and the alkaline substances 13 may be increased in weight. As a result, aliphatic acids may be effectively prevented from being volatilized due to the neutralization reaction. Further, because the saturated aqueous solution of calcium hydroxide used as the alkaline substances 13 may have a pH value of 12.5, the neutralization reaction between aliphatic acids contained in the wood powder 14 and calcium hydroxide may be induced quickly. Further, the heating step is provided between the kneading step and the molding step. Therefore, even when aliphatic acids contained in the wood powder 14 remain unneutralized without neutralized by the alkaline substances 13, such aliphatic acids may be volatilized in the heating step so as to be removed from the pellets of the plant fiber-reinforced resin 18. Further, odor components may be volatilized in the heating step. This may contribute to reduction of a smell of burning as an additional effect. In addition, the ratio of calcium hydroxide to the wood powder 14 by weight may be set to 5 percent or more. Therefore, aliphatic acids contained in the wood powder 14 may be effectively neutralized.

<In the present embodiment (Example 1 in FIG. 7), the mixing ratio of the wood powder 14 and calcium hydroxide in the mixing step is set to 20:1 by weight. However, as shown by Examples 2 to 4 in FIG. 7, the ratio of calcium hydroxide to the wood powder 14 may be increased as compared with Example 1.

For example, in Example 2, the mixing ratio of the wood powder 14 and calcium hydroxide may be set to 20:3. Further, similar to Example 1, the mixing ratio of the wood powder mixture 15 and the resin 12 is set to 20:80. With regard to the interior part W of Example 2, the fogging test is conducted under the ambient temperature of 90 °C. In the fogging test, the glass plate has the reflectivity (glossiness) of 99 %. Further, the fogging test of the interior part W is conducted under the ambient temperature of 100 °C (the heating step is omitted). In the fogging test, the glass plate has the reflectivity (glossiness) of 91 %. Further, when the heating step is included, the reflectivity (glossiness) of the glass plate is improved to 95 %.

In Example 3, the mixing ratio of the wood powder 14 and calcium hydroxide is set to 20:5. Further, similar to Example 1, the mixing ratio of the wood powder mixture 15 and the resin 12 is set to 20:80. With regard to the interior part W of Example 3, the fogging test is conducted under the ambient temperature of 90 °C. In the fogging test, the glass plate has the reflectivity (glossiness) of 99 %. Further, the fogging test of the interior part W is conducted under the ambient temperature of 100 °C (the heating step is omitted). In the fogging test, the glass plate has the reflectivity (glossiness) of 91 %. Further, when the heating step is included, the glass plate has the reflectivity (glossiness) of 92 %.

In Example 4, the mixing ratio of the wood powder 14 and calcium hydroxide is set to 20: 10. Further, similar to Example 1, the mixing ratio of the wood powder mixture 15 and the resin 12 is set to 20:80. With regard to the interior part W of Example 4, the fogging test is conducted under the ambient temperature of 100 °C (the heating step is omitted). In the fogging test, the glass plate has the reflectivity (glossiness) of 92 %. Further, when the heating step is included, the reflectivity (glossiness) of the glass plate is considerably improved to 98 %.

Further, in the present embodiment, in the mixing step, the wood powder 14 is mixed with calcium hydroxide as the alkaline substances 13. However, instead of calcium hydroxide, wollastonite may be used as the alkaline substances 13. Wollastonite is a term used to refer to a mineral powder containing primarily of silicon dioxide (SiO₂) and calcium oxide (CaO). A saturated aqueous solution of wollastonite may have a pH value of 9.5 to 10.5.

In Example 5, the mixing ratio of the wood powder 14 and wollastonite is set to 20:3. Further, similar to Example 1, the mixing ratio of the wood powder mixture 15 and the resin 12 is set to 20:80. With regard to the interior part W of Example 5, the fogging test is conducted under the ambient temperature of 100 °C (the heating step is omitted). In the fogging test, the glass plate has the reflectivity (glossiness) of 89 %. Further, when the heating step is included, the reflectivity (glossiness) of the glass plate is improved to 96 %.

In Example 6, the mixing ratio of the wood powder 14 and wollastonite is set to 20:5. Further, similar to Example 1, the mixing ratio of the wood powder mixture 15 and the resin 12 is set to 20:80. With regard to the interior part W of Example 6, the fogging test is conducted under the ambient temperature of 100 °C (the heating step is omitted). In the fogging test, the glass plate has the reflectivity (glossiness) of 87 %.

As shown in Control 4, instead of calcium hydroxide, barium hydroxide (Ba(OH)₂) of which a saturated aqueous solution has a pH value of 12.3 may be used as the alkaline substances 13. In Control 4, the mixing ratio of the wood powder 14 and barium hydroxide is set to 20:1. Further, similar to Example 1, the mixing ratio of the wood powder mixture 15 and the resin 12 is set to 20:80. With regard to the interior part W of Control 4, the fogging test is conducted under the ambient temperature of 100 °C (the heating step is omitted). In the fogging test, the glass plate has the reflectivity (glossiness) of 97 %. Further, barium (Ba) may be a heavy metal having an atomic number of 56. Therefore, it is considered that when the metal soap is produced by a reaction of the barium hydroxide with aliphatic acids contained in the wood powder 14, the produced metal soap may be increased in mass, so that aliphatic acids may be further prevented from being volatilized.

Further, in the present embodiment, the mixing ratio of the wood powder mixture 15 and the resin 12 is set to 20:80. However, the mixing ratio may be changed. Further, in the present embodiment, polypropylene (PP) is used as the resin 12. However, instead of polypropylene, various thermoplastic resins may be used provided that the thermoplastic resins are capable of being injection-molded at a temperature under about 210 °C or less that the wood powder (plant fiber) is prevented from being thermally decomposed. Examples of the thermoplastic resins are polystyrene (PS), ABS resins, methacrylate resins (PMMA), polyethylene (PE), polyvinyl chloride (PVC), AS resins (SAN), polyacetal (POM).

## Claims

1. An interior part manufacturing method, comprising:
a mixing step for mixing only a wood powder as a plant fiber with a powder of alkaline substances, so as to form a mixture only of wood powder and powder of alkaline substances;
wherein the method comprises a kneading step after the mixing step is completed, wherein the mixture and a resin are fed into a kneading machine and kneaded together to a condition in which the resin is thermally melted, so as to form a plant fiber-reinforced resin; and
wherein the method further comprises a molding step for forming an interior part using the plant fiber-reinforced resin obtained in the kneading step.

2. The interior part manufacturing method as described in claim 1, wherein a compound of a metal having atomic weight greater than sodium is used as the alkaline substances.

3. The interior part manufacturing method as described in claim 1, wherein alkaline substances of which a saturated aqueous solution has a pH value of 9.5 or more are used as the alkaline substances.

4. The interior part manufacturing method as described in any one of claims 1 to 3, wherein a heating step is provided between the kneading step and the molding step, and wherein in the heating step, the plant fiber-reinforced resin is heated at a temperature not less than a temperature at which volatile substances contained in the wood powder is volatilized and less than a temperature at which the resin is melted.

5. The interior part manufacturing method as described in any one of claims 1 to 4, wherein a ratio of the alkaline substances to the wood powder by weight is set to 5 percent or more.

## Patentansprüche

1. Innenteilherstellungsverfahren, wobei das Verfahren umfasst:
einen Mischschritt, in dem nur ein Holzpulver als eine Pflanzenfaser mit einem Pulver aus alkalischen Substanzen gemischt wird, um eine Mischung nur aus Holzpulver und alkalischen Substanzen zu bilden,
wobei das Verfahren nach Abschluss des Mischschritts einen Knetschritt umfasst, in dem die Mischung und ein Harz einer Knetvorrichtung zugeführt werden und bis zu einem Zustand, in dem das Harz thermisch schmilzt, geknetet werden, um ein pflanzenfaserverstärktes Harz zu bilden, und
wobei das Verfahren des Weiteren einen Formungsschritt umfasst, um unter Verwendung des pflanzenfaserverstärkten Harzes, das im Knetschritt erhalten wurde, ein Innenteil zu bilden.

2. Innenteilherstellungsverfahren nach Anspruch 1, wobei eine Verbindung aus einem Metall mit einem größeren Atomgewicht als Natrium als die alkalischen Substanzen verwendet wird.

3. Innenteilherstellungsverfahren nach Anspruch 1, wobei alkalische Substanzen, von welchen eine gesättigte wässrige Lösung einen pH-Wert von 9,5 oder mehr aufweist, als die alkalischen Substanzen verwendet werden.

4. Innenteilherstellungsverfahren nach einem der Ansprüche 1 bis 3, wobei zwischen dem Knetschritt und dem Formungsschritt ein Heizschritt vorgesehen ist, und wobei im Heizschritt das pflanzenfaserverstärkte Harz auf eine Temperatur erhitzt wird, die nicht unter einer Temperatur liegt, bei der sich im Holzpulver enthaltene flüchtige Substanzen verflüchtigen, und unter einer Temperatur liegt, bei der das Harz schmilzt.

5. Innenteilherstellungsverfahren nach einem der Ansprüche 1 bis 4, wobei ein Gewichtsverhältnis der alkalischen Substanzen bezüglich des Holzpulvers auf 5 Prozent oder mehr festgelegt ist.

## Revendications

1. Procédé de fabrication de pièce intérieure, comprenant :
une étape de mélange pour mélanger uniquement une poudre de bois en tant que fibre végétale avec une poudre de substances alcalines de manière à former un mélange uniquement de poudre de bois et de poudre de substances alcalines ;
dans lequel le procédé comprend une étape de malaxage une fois l'étape de mélange terminée, le mélange et une résine étant introduits dans un malaxeur et malaxés ensemble jusqu'à un état dans lequel la résine est thermiquement fondue, de manière à former une résine renforcée de fibres végétales ; et
dans lequel le procédé comprend en outre une étape de moulage pour former une pièce intérieure en utilisant la résine renforcée de fibres végétales obtenue à l'étape de malaxage.

2. Procédé de fabrication de pièce intérieure selon la revendication 1, dans lequel un composé d'un métal ayant un poids atomique supérieur au sodium est utilisé comme substances alcalines.

3. Procédé de fabrication de pièce intérieure selon la revendication 1, dans lequel on utilise comme substances alcalines des substances alcalines dont une solution aqueuse saturée a une valeur de pH de 9,5 ou plus.

4. Procédé de fabrication de pièce intérieure selon l'une quelconque des revendications 1 à 3, dans lequel une étape de chauffage est prévue entre l'étape de malaxage et l'étape de moulage, et dans lequel dans l'étape de chauffage, la résine renforcée de fibres végétales est chauffée à une température non inférieure à une température à laquelle les substances volatiles contenues dans la poudre de bois sont volatilisées et inférieure à une température à laquelle la résine est fondue.

5. Procédé de fabrication de pièce intérieure selon l'une quelconque des revendications 1 à 4, dans lequel un rapport des substances alcalines à la poudre de bois en poids est fixé à 5 % ou plus.
